(19) Europäisches Patentamt
European Patent Office
Office européen des brevets

(11) Publication number: **0 129 191**
**B1**

(12) # EUROPEAN PATENT SPECIFICATION

(45) Date of publication of patent specification: **30.09.87**

(51) Int. Cl.$^4$: **C 08 G 59/02,** C 08 G 59/12

(21) Application number: **84106721.8**

(22) Date of filing: **13.06.84**

(54) **In-situ advanced-epoxy adducts as toughening modifiers for epoxy coatings.**

(30) Priority: **15.06.83 US 504357**

(43) Date of publication of application:
**27.12.84 Bulletin 84/52**

(45) Publication of the grant of the patent:
**30.09.87 Bulletin 87/40**

(84) Designated Contracting States:
**DE FR GB**

(56) References cited:
**EP-A-0 092 336**
**FR-A-2 159 299**
**US-A-3 678 130**
**US-A-3 678 131**
**US-A-3 966 837**
**INTERNATIONAL POLYMER SCIENCE & TECHNOLOGY, vol. 8, no. 4, 1981, Shawbury, Shrewsbury (GB); A.PAVLIKOVA et al.: "Modification of epoxy resins by carboxyl-terminated liquid rubbers. I. Preparation of mixes, curing of resins and thier morphology", pp. 28-34**

(73) Proprietor: **The B.F. GOODRICH Company**
**Dept. 0015 WHB-6 500 South Main Street**
**Akron, Ohio 44318 (US)**

(72) Inventor: **Murphy, Walter Thomas**
**1091 Taft Avenue**
**Cuyahoga Falls, OH 44223 (US)**
Inventor: **Nichols, Carl Steven**
**3940 Magnolia Drive**
**Brunswick, OH 44212 (US)**

(74) Representative: **von Kreisler, Alek, Dipl.-Chem. et al**
**Deichmannhaus am Hauptbahnhof**
**D-5000 Köln 1 (DE)**

(56) References cited:
**JOURNAL OF APPLIED POLYMER SCIENCE, vol. 26, no. 3, March 1981, New York (US); L.T.MANZIONE et al.: "Rubber-modified epoxies. II. Morphology and mechanical properties", pp. 907-919**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

EP 0 129 191 B1

Courier Press, Leamington Spa, England.

**Description**

Background of the invention

Epoxy resins are well established base polymers for use in coatings. They have been widely used because of their many advantages, including chemical resistance, adhesion toward metal and other surfaces, and ease of thermoset cure at standard temperature. The epoxy resins are comparatively low in molecular weight and are generally required to be cross-linked with curing agents before useful properties can be expected. Typical unmodified epoxy resin systems are rigid, brittle, and as a consequence, do not reach their full potential for adhesion. This brittleness of unmodified epoxy resin systems is evidenced by the relatively poor impact resistance of epoxy coatings and adhesives.

Epoxy resin compositions are well known. Typically, they consist of an epoxy resin, a curing agent and a catalyst. The curing agent can be an acid, an anhydride, an alcohol, an amine, or an amide. These compositions cure rapidly to form hard products having good adhesion to substrates. Unfortunately, these epoxy resin compositions are quite brittle, having little flexibility and low impact resistance. Addition of plasticizers, softeners, and other compounding ingredients improve flexibility and impact resistance only at a loss of other properties such as hardness, tensile strength, and adhesion. Such ingredients have not provided an adequate solution to the brittleness problem of typical epoxy systems.

A recent practice has been to introduce an elastomeric polymer into the epoxy resin composition to toughen the mix and make it more flexible (US—A—3,331,886; 3,408,421; 3,966,837). The elastomers used often contain groups which are reactive with the epoxy groups of the resin such as carboxyl, amine, and mercaptan groups. However, the epoxy resins react less rapidly with the elastomer reactive groups than with themselves. The overall effect of the addition of elastomer to the epoxy resin composition is a reduction in the rate of cure of the composition. Additionally, the elastomer may not be completely bonded to the epoxy matrix because of the relatively slow reactivity of the elastomer groups compared to the epoxy groups. To off-set the reduction in the rate of cure, the epoxy compositions containing the elastomer are externally heated, at temperatures up to 200°C or more for extended periods, to enhance reactivity, and to achieve high hardness, good adhesion, and a toughened resin. This process is disadvantageous as the compositions cannot be used in field applications or in other places where external heating is not practical or convenient. Another disadvantage with an epoxy system of this type is the susceptibility of the elastomer to solvent extraction, especially in applications of the epoxy system in coatings for solvent storage tanks. The use of amine and amide type curing agents in epoxy-elastomer compositions have helped to eliminate the need for external heating by allowing for effective curing at standard temperatures. However, these curing agents generally do not enhance the reactivity of the elastomer with the epoxy, and hence, the cured epoxy-elastomer remains susceptible to solvent extraction. US—A—3,966,837 is typical of the prior art processes to enhance the reactivity of the epoxy-elastomer compositions.

It describes an epoxy resin composition comprising an epoxy resin (100 parts), bisphenol A (less than 100 parts) and a functional group terminated elastomer, e.g. a terminated phenolic hydroxy butadiene acrylonitrile copolymer (7.5 parts). The phenolic hydroxy terminated elastomer can be prepared by reacting a diphenol with a carboxy terminated elastomer.

EP—A—0 092 336 describes an adhesive composition and a method of making it. The composition comprises an epoxy resin, e.g. a diglycidyl ether of bisphenol A (100 parts), a chain extender, e.g. bisphenol A (10 to 30 parts) and a functional group terminated butadiene acrylonitrile copolymer, e.g. a carboxy terminated butadiene acrylonitrile copolymer with a functionality of 1.5 to 2.3, preferably 1.5 to 2.0 (5 to 20 parts). The reaction is carried out by mixing (combining) merely the neat compounds, e.g. in a one-step coreaction of the three components as mentioned above at a temperature of up to 120°C. Higher temperatures would deteriorate the claimed properties. The product obtained from the three components after heating has an epoxy equivalent from 300 to 500.

FR—A—2 159 299 discloses an epoxy resin composition comprising an epoxy resin (100 parts), bisphenol A (48 to 76 parts) and the elastomer (3 to 20 parts). The reaction is carried out as a coreaction or by first combining the epoxy resin and the elastomer and then the bisphenol A.

US—A—3 678 130 and US—A—3 678 131 also teach and suggest only a one-step process wherein the polyepoxide, the carboxyl group containing polymer and the bisphenol A are simultaneously reacting together (see Examples, "combined"). "Journal of Applied Polymer Science" Vol. 26, pages 907 to 919 (1981) teaches the reaction of the epoxy resin and the elastomer first, followed by reaction with bisphenol A.

One object of the present invention is to eliminate the necessity for high temperature heat curing of the final epoxy-elastomer compositions by use of an advanced-epoxy adduct to modify the base epoxy resin. A second object is to utilize the adduct to attain an improvement in impact resistance and adhesion of epoxy coatings. A third object is to prereact the epoxy with the elastomer to form the adduct composition to ensure that the elastomer has adequately bonded to the epoxy matrix prior to final curing.

Summary of the Invention

This invention relates to an advanced-epoxy adduct prepared by 1) the initial reaction of about 100 parts by weight of diglycidyl ether of a bis-phenol with 25—50 parts by weight of a bis-phenol, and 2) a subsequent reaction with about 15—75 parts by weight of a carboxyl-terminated reactive liquid polymer.

The above components, when reacted in the proper sequence and proportions, were unexpectedly found to yield an advanced-epoxy composition which, when used as an adduct for epoxy coating systems, resulted in a dramatic improvement in impact resistance and adhesion. More particularly, the invention involves a mixture containing about 100 parts of the diglycidyl ether of a bisphenol reacted under specified conditions with about 25—50 parts of a bis-phenol, and further reacted with about 15—75 parts of a carboxyl-terminated reactive liquid polymer, and used as an adduct for modifying epoxy coatings.

Detailed Description

This invention relates to a particular means to modify epoxy coatings in such a way as to dramatically increase their impact resistance and adhesion. Specifically the invention relates to a novel process for modifying epoxy coatings by admixing therewith an advanced-epoxy adduct composition containing the diglycidyl ether of a bisphenol, a bis-phenol, and carboxyl-terminated reactive liquid polymer. Additionally, the invention involves the discovery of a novel advanced-epoxy adduct composition and its method of preparation.

The novel advanced-epoxy adduct composition of the present invention gives a unique set of advantages when used to modify epoxy systems. One advantage is that the modified epoxy system is curable at ambient temperature, without application of external heating. A second advantage is that a dramatic improvement in impact resistance and adhesion is achieved over unmodified epoxy systems. A third advantage is that the elastomer is firmly bonded to the epoxy polymer prior to curing, thus increasing its resistance to solvent extraction. These advantages result from the preparation of the adduct composition as a prereact wherein the elastomer is bonded to the epoxy polymer. The subsequent use of the adduct-prereact in epoxy systems leads to a firmly bonded epoxy-elastomer material upon final curing.

The advanced-epoxy adduct composition comprises a diglycidyl ether of a bis-phenol (DGEBP), a bis-phenol, and a carboxyl-terminated reactive liquid polymer. Preferably, the composition comprises the three ingredients above where the preparation is performed in a two-step reaction, with the DGEBP reacting with a bis-phenol in the first step, followed by a reaction of this mixture with carboxyl-terminated liquid polymer in the second step. The adduct composition is prepared by the initial reaction of about 100 parts by weight of the DGEBP with about 25—50 parts by weight of a bis-phenol, and the subsequent reaction with about 15—75 parts by weight of a carboxyl-terminated reactive liquid polymer. More preferably, the adduct is prepared by the reaction of about 100 parts of the DGEBP with about 30—40 parts by weight of a bis-phenol, and the subsequent reaction with about 15—40 parts by weight of a carboxyl-terminated reactive liquid polymer.

The initial reaction of the DGEBP with a bis-phenol is preferably carried out by heating the mixture to about 150°C—200°C for a period of about 1—3 hours. This step results in an enhancement of the molecular weight of the epoxy polymer. The mixture is then cooled to a temperature in the range of about 100°C to 130°C. This cooling step is carried out to allow temperature control of the exothermic reaction in step 2 and thus to prevent decomposition of the epoxy-elastomer product. The subsequent reaction with carboxyl-terminated reactive liquid polymer is carried out in the presence of a suitable catalyst. This reaction is quite exothermic and is controlled at a temperature of about 170—180°C for approximately one hour. The mixture is then allowed to cool and the advanced-epoxy adduct composition is yielded.

The DGEBP materials used in the practice of this invention are commercially available products. A typical product is the diglycidyl ether of Bisphenol A (DGEBA). The preparation of DGEBA is described in US—A—2,500,449. Preferably the DGEBA should have an epoxy equivalent weight in the range of about 175 to 600. Epoxy equivalent weight is defined as the weight of epoxy resin in grams which contains one gram equivalent of epoxy or oxirane group. A titrametric procedure for determination of epoxy equivalent weight can be found in Lee and Neville, *Handbook of Epoxy Resins,* pp. 4—17, (McGraw-Hill, 1967).

Suitable bis-phenols for use in this invention include bis-phenols of the formula

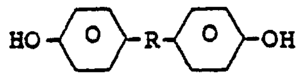

where R is an alkylene group containing 1 to 12 carbon atoms or a bivalent radical containing 1 to 8 atoms selected from C, O, S, and N. Examples of the bisphenols are methylene bisphenol, butylidene bisphenol, octylidene bisphenol, p,p'-isopropylidene bisphenol and bisphenol sulfide. Preferably, the bisphenol should be Bisphenol A(BPA).

The carboxyl-terminated reactive liquid polymers employed in this invention have a molecular weight ranging from about 1000 to about 20,000 and a bulk viscosity from about 1000 to about 8,000,000 centipoises, measured at 27°C using a Brookfield LVT Viscometer with spindle No. 7 at 0.5 to 100 rpm. The carboxyl-terminated polymers have an average functionality of from about 1.5 to about 12, and preferably from about 1.8 to about 4. The average functionality can be determined by multiplying the molecular weight of the polymer by the equivalent parts per grams of carboxyl groups (—COOH). Examples of liquid carboxyl-terminated polymers are carboxyl-terminated polyethylene, carboxyl-terminated polybutadiene, carboxyl-terminated polyisoprene, carboxyl-terminated poly(butadine-acrylonitrile), carboxyl-terminated poly(butadiene-styrene) and carboxyl-terminated poly(ethyl acrylate). Preparation of carboxyl-terminated

liquid polymers is described in US—A—3,135,716; 3,285,949; and 3,431,235. Preferably the carboxyl-terminated liquid polymer should be carboxyl-terminated polybutadiene-acrylonitrile.

The reactions for preparing the advanced-epoxy adduct of this invention can also be carried out in a suitable organic solvent such as an aromatic hydrocarbon, an aliphatic ketone or an ether-alcohol. Preferably the solvent should be xylene, methyl isobutyl ketone or 2-ethoxy-ethanol. The use of a solvent allows for effective temperature control and more convenient handling of the finished materials.

Suitable catalysts for these reactions would be tertiary amines, quaternary amine salts, tri-aryl phosphines, tri-alkyl phosphines, and tetra-aryl phosphonium salts and tetra-alkyl phosphonium salts and mixtures thereof. Preferably the catalyst should be tri-phenyl phosphine.

The two-step reaction involved in the preparation of the advanced-epoxy adduct using DGEBA, Bisphenol A, and a carboxyl-terminated liquid polymer can be exemplified by the following:

Step 1

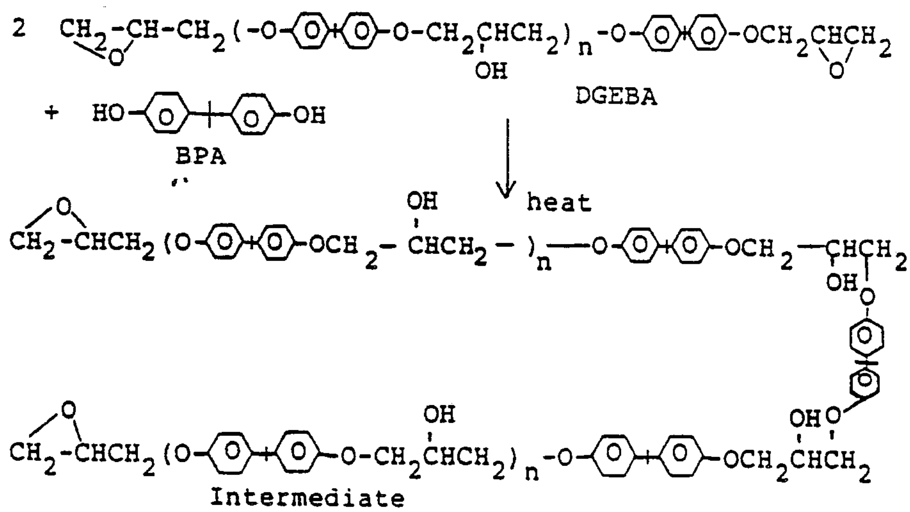


Intermediate

Step 2

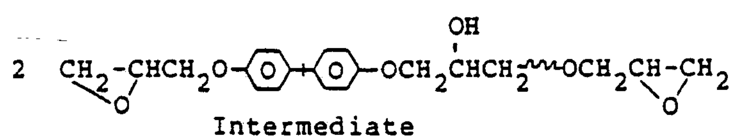

Intermediate

\+ HOOC(RLP)COOH

(carboxyl-terminated reactive liquid polymer)

catalyst

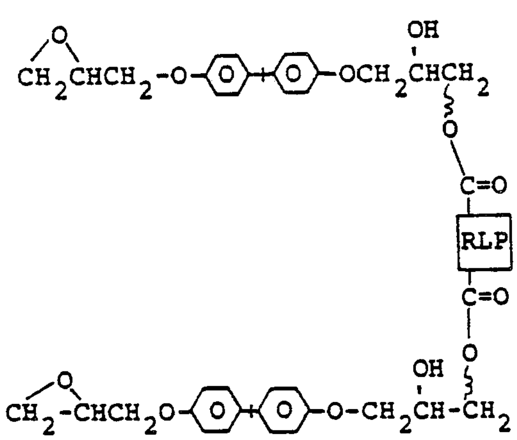

Advanced-Epoxy Adduct

The preferred adduct should have an epoxy equivalent weight in the range of 600 to 1200.

Both the concentration of ingredients and the synthesis of the adduct as a pre-react are important in this invention to obtain the dramatic improvement in impact resistance and adhesion over unmodified epoxy systems. To demonstrate this invention a series of adducts were prepared using DGEBA, Bisphenol A, and carboxyl-terminated polybutadiene-acrylonitrile (CTBN). The following formulations listed in Table I were used in the preparation of these adducts:

TABLE I

| Adduct # | DGEBA* | Bisphenol A* | CTBN* | Adduct EEW** |
|---|---|---|---|---|
| 1 | 100 parts | — | 66.7 parts | 1368 |
| 2 | 100 parts | 20 parts | 80 parts | 817 |
| 3 | 100 parts | 20 parts | 80 parts | 776 |
| 4 | 100 parts | 35 parts | 22.5 parts | 1035 |

* Parts by weight
** EEW = epoxy equivalent weight

In adduct no. 1, the DGEBA had an epoxy equivalent weight of 525. In adduct #2—4, the DGEBA had an epoxy equivalent weight of 190. Adduct no's. 1 and 2 were synthesized in a one step reaction. Adduct no. 3 was synthesized in a two step process where DGEBA and CTBN were first allowed to react followed by the reaction with BPA.

Adduct no. 4 was prepared in a two step process where DGEBA and BPA were first reacted followed by the reaction with CTBN. Adduct no. 4 is the composition covered by the scope of the present invention. In its preparation, the DGEBA and BPA were charged into a reactor equipped with a condenser, agitator, nitrogen purge, temperature probe and heating mantle. The reactor headspace was purged with nitrogen throughout the reactions. The heat and agitator were turned on and the temperature raised to 175°C over a 1-hour period. The reaction mix was cooled to 130°C in 30 minutes and maintained for 1 hour. In the second step of the reaction, CTBN and tri-phenyl-phosphine catalyst were added to the reaction mix. Viscosity increased markedly as the reaction mix was heated and stirred to a temperature of 175°C in 5 minutes. The mix was allowed to react for 1 hour while a temperature range of 175°—180°C was maintained. The mix was then poured into a non-stick tray and cooled to room temperature. A light-yellow semi-transparent solid mass was obtained having an epoxy equivalent weight of 1035.

The adducts were evaluated by admixing them into a standard epoxy-polyamide maintenance coating. The complete coating formulations contained a total epoxy content of 100 parts by weight, 146—166 parts by weight $TiO_2$, 65—116 parts by weight methyl isobutyl ketone, 5 parts by weight phenolic surfactant, 31.7—51.4 parts by weight Versamid® 115 polyamide curing agent, 32—59 parts by weight 2-ethoxy-ethanol, 67—123 parts by weight xylene, and 10—15 parts by weight CTBN. Complete formulations are listed in Table II.

TABLE II

| | Adduct* Content | Base* Epoxy | $TiO_2$* | MIBK* | Phenolic* Surfactant | Poly-* amide | Xylene* | 2-ethoxy-* ethanol |
|---|---|---|---|---|---|---|---|---|
| Adduct #1 | 25 | 85 | 157 | 67 | 5 | 47 | 69 | 34 |
| Adduct #1 | 37.5 | 77.5 | 161 | 68 | 5 | 45.9 | 72 | 36 |
| Adduct #2 | 25 | 85 | 161 | 68 | 5 | 51.0 | 72 | 36 |
| Adduct #2 | 37.5 | 77.5 | 166 | 71 | 5 | 51.4 | 75 | 36 |
| Adduct #3 | 25 | 85 | 161 | 68 | 5 | 50.5 | 72 | 36 |
| Adduct #3 | 37.5 | 77.5 | 166 | 71 | 5 | 50.8 | 75 | 36.3 |
| Adduct #4 | 69.9 | 40.1 | 148 | 115 | 5 | 37.8 | 123 | 59 |
| Adduct #4 | 104.9 | 10.1 | 147 | 116 | 5 | 31.7 | 90 | 44 |
| Control | none | 100 | 160 | 65 | 5 | 50 | 67 | 32 |

* Parts by weight

When these coatings were evaluated for Gardner reverse impact and adhesion, the test results listed in Table III below were obtained:

TABLE III

| | Adduct Content* | Total CTBN* Content | Total* Epoxy Content | Elcometer Hardness bar (psi) | Gardner Reverse Impact J (in.lbs.) |
|---|---|---|---|---|---|
| Adduct #1 | 25 | 10 | 100 | >69 (>1000) | 2.1 (19) |
| Adduct #1 | 37.5 | 15 | 100 | >69 (>1000) | 2.1 (19) |
| Adduct #2 | 25 | 10 | 100 | >69 (>1000) | 4.4 (39) |
| Adduct #2 | 37.5 | 15 | 100 | >69 (>1000) | 4.4 (39) |
| Adduct #3 | 25 | 10 | 100 | >69 (>1000) | 2.0 (18) |
| Adduct #3 | 37.5 | 15 | 100 | >69 (>1000 | 2.0 (18) |
| Adduct #4 | 69.9 | 10 | 100 | >69 (>1000) | >36.2 (>320) |
| Adduct #4 | 104.9 | 15 | 100 | >69 (>1000) | 17.0 (150) |
| Control | none | none | 100 | 50 (730) | 8.9 (79) |

* Parts by weight

The above results show that only adduct #4 gave the dramatically improved reverse impact resistance.

It is believed that the degree of advancement of the epoxy with BPA has some effect in enhancing impact resistance, as the control coating and the coating containing adduct #1 has no such advancement. It is also believed that the ratio of epoxy to BPA is important with an acceptable ratio being in the range of about 100/25 to 100/50. The epoxy/elastomer ratio is also believed to be important, with an acceptable ratio being in the range of about 100/15 to 100/75.

Typical epoxy resins which can be modified by the adduct compositions of this invention are those which contain terminal epoxy groups or oxirane groups of the general formula

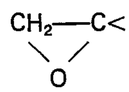

as the principal reactive groups. Many such materials are known, for example, di-epoxy ethers of diphenols such as the diglycidyl ether of Bisphenol A, di-epoxy esters of dicarboxylic acids such as diglycidyl adipate, and di-epoxy derivatives of dienes such as butadiene dioxide or vinyl cyclohexane dioxide. A number of these epoxy resins are available commercially such as the Epon® resins of the Shell Chemical Corporation and certain Bakelite® resins of the Union Carbide Corporation.

**Claims**

1. An advanced-epoxy adduct prepared by 1) the initial reaction of about 100 parts by weight of diglycidyl ether of a bis-phenol with a 25—50 parts by weight of a bis-phenol, and 2) a subsequent reaction with about 15—75 parts by weight of a carboxyl-terminated reactive liquid polymer.

2. A composition of claim 1 where the initial reaction of the diglycidyl ether of a bis-phenol with the bisphenol is carried out by heating the mixture to about 150°C—200°C for a period of about 1—3 hours, and the subsequent reaction with a carboxyl-terminated reactive liquid polymer is carried out in the presence of a catalyst.

3. A composition of claim 2 where the bis-phenol is Bisphenol A.

4. A composition of claim 3 where about 100 parts by weight of the diglycidyl ether of Bisphenol A is initially reacted with about 35 parts by weight of Bisphenol A, and subsequent reaction with about 22.5 parts by weight of a carboxyl-terminated reactive liquid polymer.

5. A process for preparing an advanced-epoxy adduct composition comprising 1) reacting about 100 parts by weight of a diglycidyl ether of a bis-phenol with about 25—50 parts by weight of a bis-phenol by heating the mixture to about 150°C—200°C for a period of about 1—3 hours, and 2) reacting the mixture with about 15—75 parts by weight of a carboxyl-terminated reactive liquid polymer in the presence of a catalyst.

6. A process of claim 5 where the bis-phenol is Bisphenol A.

7. A process of claim 5 where the reactions are carried out in an organic solvent selected from among an aromatic hydrocarbon, an aliphatic ketone, or an ether-alcohol.

8. A process for modifying epoxy-polyamide coatings to achieve improved impact resistance comprising admixing therewith an advanced-epoxy adduct prepared by 1) the initial reaction of about 100 parts by weight of a diglycidyl ether of a bis-phenol with about 25—50 parts by weight of a bis-phenol, and 2) subsequent reaction with about 15—75 parts by weight of a carboxyl-terminated reactive liquid polymer.

9. A process of claim 8 where the initial reaction of the diglycidyl ether of a bis-phenol with the bis-phenol is carried out by heating the mixture to about 150°C—200°C for a period of about 1—3 hours and the subsequent reaction with carboxyl-terminated reactive liquid polymer is carried out in the presence of a catalyst.

10. An epoxy-polyamide coating composition containing an advanced-epoxy adduct as described in claim 1 wherein the amount of advanced-epoxy adduct admixed corresponds to a concentration of carboxyl-terminated liquid polymer in the epoxy-polyamide coating composition in the range of about 15—40 parts by weight per 100 parts by weight epoxy.

**Patentansprüche**

1. Reagiertes Epoxid-Addukt, hergestellt durch 1) die anfängliche Reaktion von etwa 100 Gew.-Teilen eines Diglycidylethers eines Bis-phenols mit 25 bis 50 Gew.-Teilen eines Bis-phenols und 2) eine nachfolgende Reaktion mit etwa 15 bis 75 Gew.-Teilen eines carboxyl-endständigen reaktionsfähigen flüssigen Polymers.

2. Zusammensetzung nach Anspruch 1, worin die anfängliche Reaktion des Diglycidylethers eines Bis-phenols mit dem Bis-phenol durch Erhitzen der Mischung auf etwa 150°C bis 200°C während eines Zeitraums von etwa 1 bis 3 h durchgeführt wird und die nachfolgende Reaktion mit einem carboxyl-endständigen reaktionsfähigen flüssigen Polymer in Gegenwart eines Katalysators durchgeführt wird.

3. Zusammensetzung nach Anspruch 2, worin das Bis-phenol Bisphenol A ist.

4. Zusammensetzung nach Anspruch 3, worin anfänglich etwa 100 Gew.-Teile des Diglycidylethers von Bisphenol A mit etwa 35 Gew.-Teilen Bisphenol A umgesetzt werden und die nachfolgende Reaktion mit etwa 22,5 Gew.-Teilen eines carboxyl-endständigen reaktionsfähigen flüssigen Polymers erfolgt.

5. Verfahren zur Herstellung einer reagierten Epoxid-Addukt-Zusammensetzung, umfassend 1) die Reaktion von etwa 100 Gew.-Teilen eines Diglycidylethers eines Bisphenols mit etwa 25 bis 50 Gew.-Teilen eines Bis-phenols durch Erhitzen der Mischung auf etwa 150°C bis 200°C während eines Zeitraums von etwa 1 bis 3 h und 2) die Reaktion der Mischung mit etwa 15 bis 75 Gew.-Teilen eines carboxyl-endständigen reaktionsfähigen flüssigen Polymers in Gegenwart eines Katalysators.

6. Verfahren nach Anspruch 5, worin das Bis-phenol Bisphenol A ist.

7. Verfahren nach Anspruch 5, worin die Reaktionen in einem organischen Lösungsmittel, ausgewählt aus einem aromatischen Kohlenwasserstoff, einem aliphatischen Keton oder einem Ether-Alkohol durchgeführt werden.

8. Verfahren zur Modifizierung von Epoxid-Polyamid-Beschichtungen zur Erzielung einer verbesserten Schlagzähigkeit, wobei diesen ein reagiertes Epoxid-Addukt zugemischt wird, das hergestellt ist durch 1) die anfängliche Reaktion von etwa 100 Gew.-Teilen eines Diglycidylethers eines Bis-phenols mit etwa 25 bis 50 Gew.-Teilen eines Bis-phenols und 2) die nachfolgende Reaktion mit etwa 15 bis 75 Gew.-Teilen eines carboxyl-endständigen reaktionsfähigen flüssigen Polymers.

9. Verfahren nach Anspruch 8, worin die anfängliche Reaktion des Diglycidylethers eines Bis-phenols mit dem Bis-phenol durch Erhitzen der Mischung auf etwa 150°C bis 200°C während eines Zeitraums von etwa 1 bis 3 h durchgeführt wird und die nachfolgende Reaktion mit einem carboxyl-endständigen reaktionsfähigen flüssigen Polymer in Gegenwart eines Katalysators durchgeführt wird.

10. Epoxid-Polyamid-Beschichtungs-Zusammensetzung, enthaltend ein reagiertes Epoxid-Addukt nach Anspruch 1, worin die Menge des zugemischten reagierten Epoxid-Addukts einer Konzentration des carboxyl-endständigen flüssigen Polymers in der Epoxid-Polyamid-Beschichtungs-Zusammensetzung im Bereich von etwa 15 bis 40 Gew.-Teilen auf 100 Gew.-Teile Epoxid entspricht.

**Revendications**

1. Produit d'addition d'époxyde élaboré, préparé par 1) la réaction initiale d'environ 100 parties en poids d'éther diglycidylique d'un bis-phénol avec 25 à 50 parties en poids d'un bis-phénol, et 2) une réaction subséquente avec environ 15 à 75 parties en poids d'un polymère liquide réactif terminé par un groupe carboxyle.

2. Composition de la revendication 1, dans laquelle la réaction initiale de l'éther diglycidylique d'un bis-phénol avec le bisphénol est effectuée par chauffage du mélange à environ 150°C—200°C pendant une période d'environ 1 à 3 heures, et la réaction subséquente avec un polymère liquide réactif terminé par un groupe carboxyle est effectuée en présence d'un catalyseur.

3. Composition de la revendication 2, dans laquelle le bis-phénol est le Bisphénol A.

4. Composition de la revendication 3, dans laquelle on a fait initialement réagir environ 100 parties en

poids de l'éther diglycidylique de Bisphénol A avec environ 35 parties en poids de Bisphénol A suivi d'une réaction avec environ 22,5 parties en poids d'un polymère liquide réactif terminé par un groupe carboxyle.

5. Procédé pour préparer une composition de produit d'addition d'époxyde élaboré, comprenant 1) la réaction d'environ 100 parties en poids d'un éther diglycidylique d'un bis-phénol avec environ 25 à 50 parties en poids d'un bis-phénol par chauffage du mélange à environ 150°C—200°C pendant une période d'environ 1 à 3 heures, et 2) la réaction du mélange avec environ 15 à 75 parties en poids d'un polymère liquide réactif terminé par un groupe carboxyle en présence d'un catalyseur.

6. Procédé de la revendication 5, dans lequel le bis-phénol est le Bisphénol A.

7. Procédé de la revendication 5, dans lequel on effectue les réactions dans un solvant organique choisi parmi un hydrocarbure aromatique, une cétone aliphatique, ou un éther-alcool.

8. Procédé pour modifier des revêtements époxyde-polyamide pour obtenir une meilleure résistance à l'impact, consistant à leur incorporer un produit d'addition d'époxyde élaboré, préparé par 1) la réaction initiale d'environ 100 parties en poids d'un éther diglycidylique d'un bis-phénol avec environ 25 à 50 parties en poids d'un bis-phénol, et 2) la réaction subséquente avec environ 15 à 75 parties en poids d'un polymère liquide réactif terminé par un groupe carboxyle.

9. Procédé de la revendication 8, dans lequel on effectue la réaction initiale de l'éther diglycidylique d'un bis-phénol avec le bis-phénol en chauffant le mélange à environ 150°C—200°C pendant une période d'environ 1 à 3 heures, suivi d'une réaction avec un polymère liquide réactif terminé par un groupe carboxyle effectuée en présence d'un catalyseur.

10. Composition de revêtement à base d'époxyde-polyamide, contenant un produit d'addition d'époxyde élaboré tel que décrit à la revendication 1, dans laquelle la quantité du produit d'addition d'époxyde élaboré ajoutée correspond à une concentration de polymère liquide terminé par un groupe carboxyle, dans la composition de revêtement à base d'époxyde-polyamide, se situant dans la gamme d'environ 15 à 40 parties en poids pour 100 parties en poids de résine époxyde.